Europäisches Patentamt

(19) European Patent Office

Office européen des brevets

(11) Veröffentlichungsnummer: **0 172 314**

A1

(12) # EUROPÄISCHE PATENTANMELDUNG

(21) Anmeldenummer: 85104741.5

(22) Anmeldetag: 19.04.85

(51) Int. Cl.⁴: **G 06 F 15/30**
G 07 F 7/00, G 07 C 9/00

(30) Priorität: 12.05.84 DE 3417766

(43) Veröffentlichungstag der Anmeldung:
26.02.86 Patentblatt 86/9

(84) Benannte Vertragsstaaten:
AT BE CH DE FR GB IT LI LU NL SE

(71) Anmelder: Betriebswirtschaftliches Institut der
Deutschen Kreditgenossenschaft BIK GmbH
Friedrich-Ebert-Anlage 2-14
D-6000 Frankfurt 1(DE)

(72) Erfinder: Eisele, Raymund H.
Rosenweg 1
D-6368 Bad Vilbel 5(DE)

(74) Vertreter: Leineweber, Jürgen, Dipl.-Phys.
Am Heidstamm 78 a
D-5000 Köln 40(DE)

(54) Arbeits-Verfahren und Einrichtung zum elektronisch autorisierten Feststellen einer Sache.

(57) Arbeits-Verfahren und Einrichtung zum elektronisch autorisierten Feststellen einer individuellen Sache und fern-autorisierter, individueller unterscheidungs- und fälschungs-sicherer Unterzeichnung eines unterzeichnungsbedürftigen Schriftvorgangs durch den Berechtigten. Das Gesamtsystem besteht aus zwei Hardware-Komponenten, der AIDA-Box (1), ein Taschenrechner mit speziellen Funktionstasten und dem AIDA-Module (5), einem Doppelprozessor-System mit AIDA-Einschubkarten (9), die spezielle Chips (10) enthalten. Durch die Eingabe einer persönlichen Identifikations-Nummer in die AIDA-Box (1) wird unter zwischenzeitlicher physikalischer Einwirkung auf den Chip (10) mit Hilfe des Algorithmus eine Identifikations-Nummer errechnet und angezeigt. Eine elektronische Unterschrift wird durch die Eingabe der zu unterzeichnenden Informationen errechnet und angezeigt. Die errechneten Werke werden nach der Übertragung über ein Kommunikationssystem im AIDA-Module (5) nachgeprüft.

./...

Fig.1

Betriebswirtschaftliches Institut der Deutschen Kreditgenossenschaften BIK GmbH, Friedrich-Ebert-Anlage 2-14, 6000 Frankfurt 1

"Arbeits-Verfahren und Einrichtung zum elektronisch autorisierten
Feststellen einer Sache"

---

Beschreibung:

Die Erfindung betrifft ein Arbeits-Verfahren und eine Einrichtung zum elektronisch autorisierten Feststellen einer Sache
sowie eine Rechnereinrichtung zur Durchführung des Arbeits-
Verfahrens, wobei Hauptzweck das elektronisch autorisierte
Feststellen einer individuellen Sache und fernautorisierte
individuelle unterscheidungs- und fälschungssichere Unterscheidung eines unterscheidungsbedürftigen Schriftvorgangs durch
den Berechtigten ist. Die Einrichtung besteht aus einem Taschenrechner mit Zahlenfeld und Anzeige mit zusätzlichen Funktionstasten.

In dieser Anmeldung haben die nachfolgenden Begriffe die erläuternden Bedeutungen:

| Authenticator (AUT) | digitale elektronische Unterschrift, in deren Berechnung neben der Iden-tifikation des Zeichnungsberechtig-ten auch die zu unterzeichnenden Informationen eingehen. Werden diese Informationen verändert, wird dies bei der Überprüfung des AUT festgestellt. |

| | |
|---|---|
| Kundenbediente Terminals | Einrichtungen, die nicht von Mitarbeitern eines Unternehmens, sondern von dessen Kunden selbst bedient werden. Beispiel: Bildschirmtextgeräte, Point of Sale-Terminals (POS-Geräte, die beim Einzelhändler stehen und über die der Bankkunde seine Einkäufe bezahlt). Automated Teller Machines (automatische Bankschalter, über die der Kunde beispielsweise Bargeld abheben oder Überweisungen aufgeben kann). |
| Key-Management-Verfahren | ein Verfahren, das die zur Steuerung eines Verschlüsselungsalgorithmus benötigten Geheimwerte (Keys) automatisch verändert. |
| Kommunikations-System | eine Einrichtung zur Übertragung von Informationen (Sprache, Text, Daten oder Bilder) zwischen voneinander entfernt stehenden Einrichtungen (beispielsweise Telefon, Fernschreiber, Fernkopierer, Bildschirmtext, Datenfernverarbeitungs-Terminals). |
| Input/Output = von/zum | Verarbeitungs-/Kommunikations-System. Schnittstelle, über die die Verbindung zum AIDA-Module zur Übertragung der nachzuprüfenden Werte hergestellt wird. |
| Entcrypt/Decrypt-Chip | Chip, der mit Hilfe eines Verschlüsselungsverfahrens aus dem Klartext |

einen verschlüsselten Text generiert (entcrypt) und den verschlüsselten Text in Klartext umwandelt (decrypt).

Session-PIN     eine persönliche Identifikationsnummer, die nur für die Zeit einer Verbindung zwischen der entfernt stehenden und der zentralen Einrichtung Gültigkeit hat.

TAN     Transaktionsnummer

AIDA-Karte     enthält den AIDA-Chip auf einer Einschubkarte für den Prozessor und den Chip für das Entcrypten und Decrypten der Informationen.

AIDA-Box     Taschenrechner mit gesonderten Funktionstasten.

AIDA-Module     zentrale Einrichtung für die Überprüfung der Identifikation.

Das Arbeitsverfahren und seine Einrichtung sind dort einsetzbar, wo eine eindeutige Identifikation einer Person, die Zugang zu einem Rechnersystem erhalten soll, benötigt wird. Darüberhinaus besteht die Möglichkeit, für unterzeichnungsbedürftige Vorgänge eine digitale, elektronische Unterchrift (Authenticator) durch Errechnen und Nachprüfen fälschungssicher nachzuweisen. Bei diesem Vorgang gehen alle zu unterzeichnenden Informationen in die Berechnung des Authenticators ein. Sollte nur eine dieser Informationen verändert sein, wird dies beim Nachprüfvorgang festgestellt: Der Authenticator wird als falsch erkannt. Ein typisches Beispiel für diesen Einsatzbereich sind Kundenterminals bei Banken. Der Zugang zu einem Konto wird nach erfolgreicher Identifikation erlaubt. Überweisungen

0172314

sind durch den Authenticator abgesichert, wobei zumindest die zu sichernde Information in die Berechnung des Authenticators eingeht.

Es ist bereits bekannt nach der Lehre der OS-DE 32 48 400 vom 28.12.82 eine Nachprüfanordnung im Sinne einer entfernten Benutzer-Autorisierungs-Nachprüfung vorzunehmen. Dieses Verfahren sichert aber nur die Identifikation des Teilnehmers selbst, nicht aber die Unterzeichnung eines unterzeichnungsberechtigten Vorganges durch den Unterzeichnungsberechtigten. Die Nachprüfung des Teilnehmers erfordert eine physische Verbindung zu einer Telefonleitung und einem Modem. Ist diese Verbindung nicht darstellbar oder nicht wirtschaftlich, läßt sich das gesamte Verfahren nicht einsetzen. Das gilt auch für Bedienerhinweise, die über eine Spracherzeugungseinrichtung erfolgen.

Die Erfindung hat sich die Aufgabe gestellt, die beschriebenen Nachteile gänzlich zu vermeiden und eine fernautorisierte individuelle, unterscheidungs- fälschungssichere Unterzeichnung eines unterschriftsbedürftigen Schriftvorganges durch den Berechtigten absolut sicherzustellen.

Die Erfindung löst diese Aufgabe, indem sie von einem Arbeitsverfahren gemäß Oberbegriff des Anspruches 1 ausgeht und sie kennzeichnet sich dadurch, daß zur Identifizierung und Autorisierung mittels zweier Hardware-Komponenten (AIDA-Box, AIDA-Module) über zusätzliche Funktionstasten (PIN-Tase, TAN-Taste, AUT-Taste) unter zwischenzeitlicher physikalischer Einwirkung auf einen Chip, der sich auf einer Einschubkarte befindet oder fest eingebaut ist, eine persönliche Identifikationsnummer über Taste PIN eingegeben, von einer Einschubkarte in einer zentralen Nachprüfeinrichtung AIDA-Module (5) überprüft, danach über eine Transaktionstaste TAN eine einmalige Transaktionsnummer generiert und überprüft oder die elektronische Unterschrift mittels einer AUT-Taste die Autorisierung (Authenticator) eingeleitet und beendet wird.

Es ist auch möglich, im Rahmen des Arbeits-Verfahrens, das schlußendliche Ergebnis der AIDA-Box über elektrisch leitende Kontakte
dem Kommunikationssystem und/oder die zu unterzeichnenden Informationen in die Rechnereinrichtung einzugeben.

Die Rechnereinrichtung besteht aus einem Taschenrechner mit
Zahlenfeld und Anzeige mit zusätzlichen Funktionstasten.

Die Figuren stellen ein Ausführungsbeispiel der Erfindung dar.
Es zeigen:

Fig. 1          das AIDA-System mit den beiden Hardware-Komponenten, nämlich der AIDA-Box und AIDA-Module,
                wobei die AIDA-Box den erfindungsgemäß gestalteten Taschenrechner mit Funktionstasten und
                den AIDA-Chip enthält und das AIDA-Module
                mit Doppelprozessor und AIDA-Karte ausgerüstet
                ist,

Fig. 2          den Taschenrechner mit Zusatztasten,

Fig. 3          das AIDA-Module mit den AIDA-Karten,

Fig. 4          die AIDA-Karte mit den Chips,

Fig. 5 und 6    die AIDA-Chips mit deren Eintragungen.

Die Erfindung erlaubt einen wirtschaftlichen Einsatz, ohne
daß Telekommunikationseinrichtungen verändert werden müssen.
Basis sind dabei die entfernt einzusetzende Einrichtung mittels eines modifizierten handelsüblichen Rechners und die zentrale Einrichtung auf der Basis von handelsüblichen Rechnern
mit entsprechenden üblichen Zusatzeinrichtungen, sowie den
AIDA-Karten.

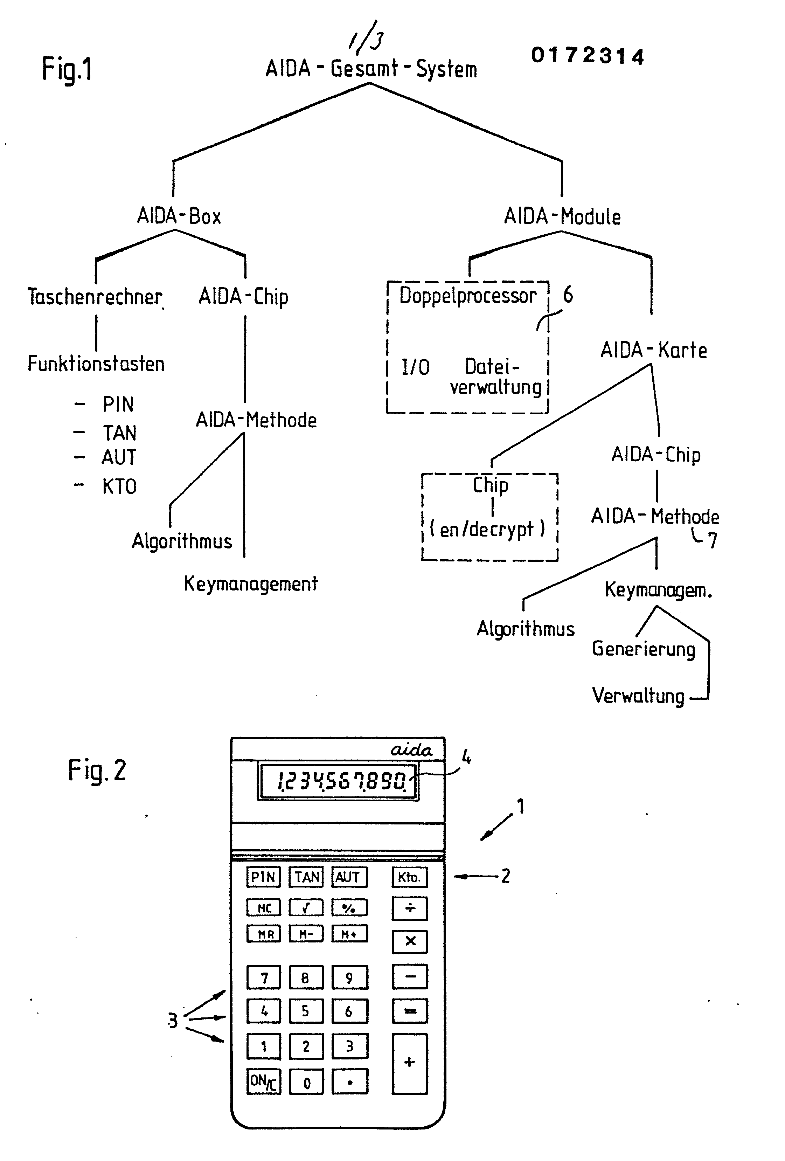

Grundsätzlich besteht das AIDA-System aus zwei Hardware-Komponenten, der AIDA-Box und dem AIDA-Module sowie aus dem Verschlüsselungs- und Key-Management-Verfahren der AIDA-Arbeits-methode. Die Komponenten des AIDA-Systems sind in den Figuren 1 dargestellt, wobei die eingeklammerten und durch Striche eingerahmten Komponenten Bestandteile des Standes der Technik sind.

Die AIDA-Box 1 basiert auf einem Taschenrechner, der gemäß Fig. 2 mehrere spezielle Funktionstasten aufweist.

Durch die Betätigung der PIN-Taste wird die AIDA-Box 1 in den Identifikationsstatus versetzt. Die persönliche Identifikations-Nummer (PIN) wird über die Eingabetaste 3 des Rechners eingegeben, ein Zufallswert errechnet und auf der Anzeige 4 angezeigt. Mit diesem Zufallswert (Session-PIN) erfolgt die Identifikation gegenüber der zentralen Einrichtung AIDA-Module 5.

Der angezeigte Session-PIN wird in das Kommunikations-System eingegeben und an das AIDA-Module 5 zur Überprüfung übertragen.

Soll nun eine Transaktions gesichert werden, wird die TAN-Taste 2 gedrückt und eine Zufallszahl, die Transaktionsnummer, wird auf dem Anzeigenfeld 4 ausgegeben. Diese Transaktionsnummer wird ebenfalls in das Kommunikationssystem eingegeben und an das AIDA-Module 5 zur Überprüfung übertragen.

Soll eine Transaktion mit einer elektronischen Unterschrift (Authenticator) abgesichert werden, wird die AUT-Taste 2 gedrückt. Danach werden die zu sichernden Informationen über die Eingabetasten 3 eingegeben, der Authenticator errechnet und auf dem Anzeigefeld 4 sichtbar gemacht. Die Informationen werden zusammen mit dem Authenticator in das Kommunikations-System eingegeben und an das AIDA-Module 5 zur Überprüfung übertragen.

Wenn die AIDA-Box im Rahmen der Erfindung mit dem Kommunikations-System über Kontakte verbunden ist, werden die auf dem Anzeigefeld 4 erscheinenden Werte über diese Kontakte in das Kommunikations-System übertragen. In die Übertragung eingeschlossen sind dann die Werte, die bei der AUT-Funktion zu sichern sind.

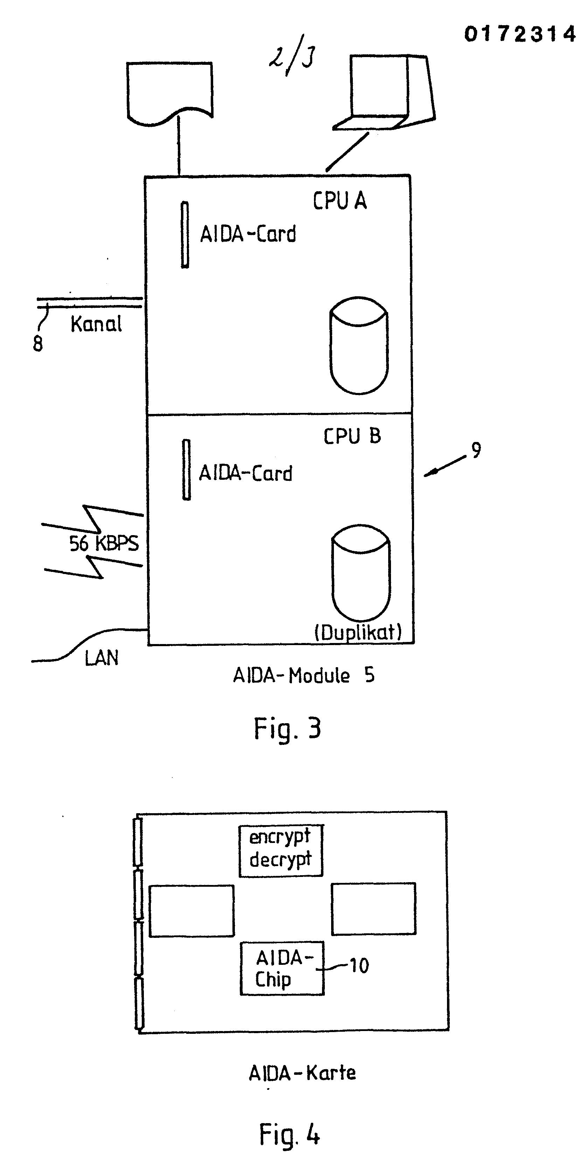

Bei dem AIDA-Module 5 handelt es sich um ein ausfallsicheres Doppelprozessor-System 6 mit duplizierten Magnetplattenspeichern. Das Module ist über einen Kanal oder Datenleitungen 8 mit dem Verarbeitungsrechner oder Kommunikations-System, wie dies die Fig. 3 zeigt, verbunden.

In das AIDA-Arbeits-Verfahren ist der AIDA-Chip 10, die AIDA-Karte 9, eine Einschubkarte für den Prozessor, eingeschlossen, wie dies die Fig. 4 zeigt. Die AIDA-Karte enthält ferner neben den Chips für die Steuerung einen Chip, der Informationen entcrypted und decrypted.

Die Identifikationswerte für die AIDA-Box 1 werden zusammen mit den geheimen Werten auf dem Magnetplattenspeicher des AIDA-Modules 5 gespeichert, wobei die geheimen Werte vor der Abspeicherung im Entcrypt-/Decrypt-Chip 11 verschlüsselt werden. Für die Überprüfung von PIN, TAN und AUT werden die geheimen Werte von der Magnetplatte gelesen, über den Entcrypt-/Decrypt-Chip 11 entschlüsselt und an den AIDA-Chip 10 auf der AIDA-Karte 9 übertragen.

Als Basis des AIDA-Verfahrens dient ein Verschlüsselungsalgorithmus. Dieser Algorithmus wird getrieben durch eine Geheimzahl, dem I-Key.

Die Identifikation läuft so ab, daß in einen Verschlüsselungsalgorithmus die Werte für I-Key (Geheimzahl), Faktor P (ein Zufallswert), der sich nach jeder Identifikation verändert) und einer persönlichen Identifikations-Nummer (PIN) eingegeben und daraus der Zufallswert (Session-PIN) errechnet wird.

Gleichzeitig wird ein Session-Key gewonnen, der bei den Funktionen AUT und TAN statt dem I-Key für das Treiben des Verschlüsselungsalgorithmus Verwendung findet, und es wird ein neuer Faktor P für die nächste Identifikation errechnet sowie der Faktor M (Transaktionssequenz-Nummer wird auf den Wert 1 gesetzt).

Für das Errechnen der Transaktions-Nummer TAN wird der S-Key, der bereits bei der Identifikation gewonnen wurde und der Faktor M (Transaktions-Sequenz-Nummer) verwendet, wobei der Faktor M sicherstellt, daß sich die Transaktions-Nummer TAN bei jedem Vorgang ändert.

Zur Errechnung des AUT verwendet man die Werte des S-Key, der bereits bei der Identifikation gewonnen wird, wiederum den Faktor M als Transaktions-Sequenz-Nummer und die zu sichernden Informationen.

Stimmen nun der im AIDA-Module 5 errechnete AUT mit dem von der AIDA-Box 1 errechneten überein, so ist sichergestellt:

- Die Transaktion stammt von einem autorisierten Teilnehmer -
- Sie wurde während der Übertragung nicht verändert -
- Sie wurde nicht früher einmal aufgezeichnet und ein zweites Mal eingespielt -
- Keine Transaktion ging während der Übertragung verloren. -

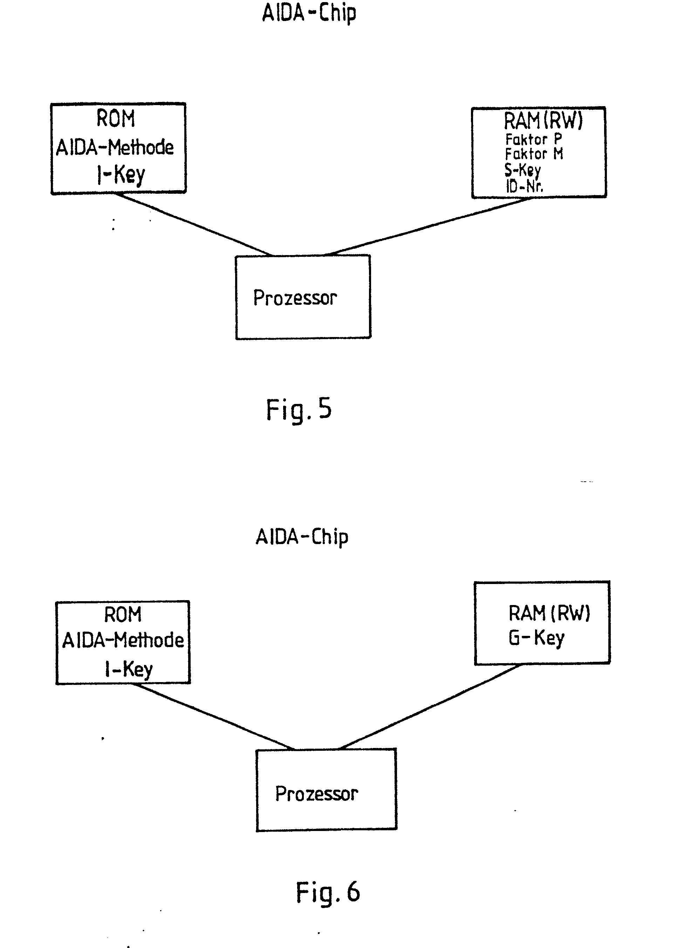

Es liegt im Rahmen der Erfindung, den AIDA-Chip in die AIDA-Box 1 gemäß Fig. 5 fest einzubauen oder über Kontakte einzustecken. Das Read Only Memory (ROM) enthält das AIDA-Arbeits-Verfahren 7 und den I-Key. Das Random-Access-Memory (RAM) enthält die nicht auslesbaren Geheimwerte Faktor P, Faktor M und S-Key sowie eine Identifikations-Nummer.

Gemäß Figur 6 befindet sich der AIDA-Chip auf der AIDA-Karte 9, die im AIDA-Module 5 enthalten ist. (s. Fig. 6) Die Geheimwerte werden nicht im RAM gehalten, sondern verschlüsselt über den Entcrypt-/Decrypt-Chip auf der Magnetspeicherplatte des AIDA-Modules 5 gespeichert. Neben den Funktionen der PIN-, TAN, AUT-Prüfung enthält dieser Chip auch Funktionen zur Generierung von Geheimwerten, wie beispielsweise der persönlichen Identifikations-Nummer (PIN).

Um die Geheimwerte in den AIDA-Chip der AIDA-Box zu bringen, gibt es zwei Möglichkeiten. Vor der Ausgabe der AIDA-Box 1 an einen berechtigten Teilnehmer werden die Geheimwerte über Kontakte in den ROM und den RAM eingelesen, oder der I-Key wird bei der Produktion des ROM fest eingebrannt, und durch das Drücken der Funktionstasten wird der AIDA-Chip in den Initialisierungsstatus versetzt. Durch die Eingabe einer Geheimnummer der ausgebenden Stelle, der Identifikations-Nummer für die AIDA-Box und des persönlichen PIN des Teilnehmers wird der Faktor P generiert und im RAM sicher gespeichert.

Wenn man davon ausgeht, daß das AIDA-Arbeits-Verfahren bekannt ist, ergeben sich rechnerisch $10^{35}$ mögliche Kombinationen der Geheimzahlen.

Ist der I-Key bekannt, wenn er zum Beispiel bei der Produktion des ROM fest eingebrannt wird, reduziert sich die Anzahl auf immerhin noch $10^{15}$ mögliche Kombinationen, so daß das System als absolut zu bezeichnen ist.

Der AIDA-Box (vgl. Fig. 2) ist noch eine Taste "Kt0" zugeordnet. Nach der Betätigung dieser Taste erscheint im Anzeigefeld 4 die zur jeweiligen Box gehörende Kontonummer. Diese Maßnahme erleichtert dem Inhaber mehrerer Konten das Finden der zugehörigen AIDA-Box.

0172314

## Bezugsziffernverzeichnis

| | | |
|---|---|---|
| 1 | AIDA-Box | |
| 2 | Funktionstasten | – TAN |
| | | – PIN |
| | | – AUT |
| | | – KTO |
| 3 | Eingabetasten | |
| 4 | Anzeigefeld, Anzeige | |
| 5 | AIDA-Module | |
| 6 | Doppelprozessor-System | |
| 7 | AIDA-Methode | |
| 8 | Kanal, Datenleitungen | |
| 9 | AIDA-Karte (Einschubkarte) | |
| 10 | AIDA-Chip | |
| 11 | Chip für Entcrypten und Decrypten | |

Patentansprüche

1. Arbeits-Verfahren zum elektronisch autorisierten Feststellen einer individuellen Sache und fernautorisierter, individueller, unterscheidungs- und fälschungssicherer Unterzeichnung eines unterzeichnungsbedürftigen Schriftvorgangs durch den Berechtigten, dadurch gekennzeichnet, daß zur Identifizierung und Autorisierung mittels zweier Hardware-Komponenten (AIDA-Box, AIDA-Module) über zusätzliche Funktionstasten (PIN-Taste, TAN-Taste, AUT-Taste) unter zwischenzeitlicher physikalischer Einwirkung auf einen Chip, der sich auf einer Einschubkarte befindet oder fest eingebaut ist, eine persönliche Identifikations-Nummer über Taste PIN eingegeben, von einer Einschubkarte in einer zentralen Nachprüfeinrichtung AIDA-Module (5) überprüft, danach über eine Transaktionstaste TAN eine einmalige Transaktions-Nummer generiert und überprüft oder die elektronische Unterschrift mittels einer AUT-Taste die Autorisierung (Authenticator) eingeleitet und die zu sichernde Information eingegeben sowie beendet wird.

2. Verfahren nach Anspruch 1, dadurch gekennzeichnet, daß die errechneten Ergebnisse über elektrisch leitende Kontakte in ein Kommunikationssystem eingegeben und/oder die zu unterzeichnenden Informationen über das System in die Rechnereinrichtung eingegeben werden.

3. Verfahren nach den Ansprüchen 1 und 2, dadurch gekennzeichnet, daß die Ergebnisse in einer zentralen Nachprüfung mit Rechnereinrichtung überprüft werden.

4. Rechnereinrichtung (Taschenrechner mit Zahlenfeld und Anzeige) mit zusätzlichen Funktionstasten zum Durchführen des Verfahrens nach den Ansprüchen 1 bis 3, dadurch gekennzeichnet, daß eine Mehrzahl von Tasten dem Rechnerfeld zugeordnet sind.

5. Rechnereinrichtung nach den Ansprüchen 1 bis 4, dadurch gekennzeichnet, daß drei gesonderte Tasten (PIN, TAN, AUT) angeordnet sind.

6. Rechnereinrichtung nach den Ansprüchen 1 bis 4, dadurch gekennzeichnet, daß den Tasten eine KTO-Taste zugeordnet ist.

7. Verfahren zur Identifikation des Benutzers eines Terminals gegenüber einer Zentraleinheit (Rechner, Datenspeicher), dadurch gekennzeichnet, daß

a) in einen vom Terminal unabhängigen Rechner (1) in Taschenformat eine persönliche Identifikationsnummer (PIN) eingegeben wird, welcher diese nach einem bestimmten Algorithmus in eine nur für den jeweiligen Nutzungsfall gültige Identifikationsnummer (SPIN) verschlüsselt, diese SPIN in das Terminal von Hand oder über Kabel eingegeben und an die Zentraleinheit übertragen wird und daß

b) die Überprüfung der SPIN in einem der Zentraleinheit zugeordneten Modul (5) erfolgt, in dem die SPIN entschlüsselt wird und - für den Fall des richtigen Ergebnisses - der Zugang zur Nutzung der Zentraleinheit freigegeben wird.

8. Verfahren nach Anspruch 7, dadurch gekennzeichnet, daß

a) zum Zwecke der Änderung der PIN zunächst eine Identifikation mit Hilfe der noch gültigen PIN durchgeführt wird,

- 12 -

b) die neue PIN in den Taschenrechner (1) eingegeben wird, welcher diese in eine neue SPIN
verschlüsselt, diese neue SPIN in das Terminal
eingegeben und an die Zentraleinheit übertragen
wird und

c) die neue PIN im der Zentraleinheit zugeordneten
Modul (5) registriert wird.

9. Verfahren zur Durchführung einer Transaktion mit
Hilfe eines mit einer Zentraleinheit (Rechner,
Datenspeicher) verbundenen Terminals, dadurch gekennzeichnet, daß

a) die Identifikation des Benutzers nach Anspruch 7
durchgeführt wird,

b) mit Hilfe des Rechners (1) in Taschenformat eine
die SPIN einbeziehende Zahl generiert wird, diese
in das Terminal eingegeben und als Transaktionsnummer (TAN) verwendet wird.

10. Verfahren zur Durchführung von Transaktionen, die zu
einer Geldbewegung führen, mit Hilfe eines mit einer
zentralen Rechnereinheit verbundenen Terminals, dadurch gekennzeichnet, daß

a) die Identifikation des Benutzers nach Anspruch 7
durchgeführt wird,

b) mit Hilfe des Rechners (1) in Taschenformat aus Informationen, die während der Identifikation gewonnen wurden, der Kontonummer des Empfängers sowie vorzugsweise noch aus dem zu bewegenden Betrag ein Authentikator (AUT) errechnet wird und diese Daten in das Terminal eingegeben und an die Zentraleinheit übertragen werden,

c) die Überprüfung des AUT mit Hilfe des der Zentraleinheit zugeordneten Moduls (5) erfolgt und - für den Fall des richtigen Ergebnisses - die Rechnereinheit davon ausgehen kann, daß die durch den AUT gesicherten Werte der Transaktion von einem autorisierten Benutzer stammen, während der Übertragung nicht verändert wurden und die Transaktion nicht dupliziert wurde.

11) Einrichtung zur Durchführung der Verfahren nach Anspruch 7, 8, 9 oder 10 mit einem Terminal und einer damit verbundenen Zentraleinheit (Rechner, Datenspeicher), dadurch gekennzeichnet, daß dem Terminal ein Rechner (1) in Taschenformat zur Errechnung von SPIN, TAN und/oder AUT und der Zentraleinheit ein Modul (5) zur Überprüfung von SPIN, TAN und/oder AUT zugeordnet sind und daß der Taschenrechner (1) und das Modul (5) mit dem gleichen Algorithmus und nach dem gleichen Verfahren (AIDA-Methode) arbeiten.

# Fig.1

1/3  0172314

AIDA - Gesamt - System

AIDA - Box
- Taschenrechner
  - Funktionstasten
    - PIN
    - TAN
    - AUT
    - KTO
- AIDA - Chip
  - AIDA - Methode
    - Algorithmus
    - Keymanagement

AIDA - Module
- Doppelprocessor  6
  - I/O   Datei-verwaltung
- AIDA - Karte
  - Chip (en/decrypt)
  - AIDA - Chip
    - AIDA - Methode  7
      - Algorithmus
      - Keymanagem.
        - Generierung
        - Verwaltung

# Fig.2

aida  4

1234567890

1

2

PIN  TAN  AUT  Kto.
MC  √  %  ÷
MR  M-  M+  ×
7  8  9  −
4  5  6  =
1  2  3
ON/C  0  .  +

3

CPU A

AIDA-Card

Kanal

8

CPU B

AIDA-Card

9

56 KBPS

LAN

(Duplikat)

AIDA-Module 5

Fig. 3

encrypt
decrypt

AIDA-
Chip — 10

AIDA-Karte

Fig. 4

AIDA-Chip

Fig. 5

AIDA-Chip

Fig. 6

## Europäisches Patentamt

# EUROPÄISCHER RECHERCHENBERICHT

| | EINSCHLÄGIGE DOKUMENTE | | EP 85104741.5 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| A | <u>EP - A2 - 0 055 580</u> (HONEYWELL)<br><br>* Zusammenfassung; Seite 2, Zeile 21; Seite 8, Zeilen 15-30; Patentanspruch 1 - Zeile 30; Fig. 1,2 *<br><br>-- | 1,2,3, 7,11 | G 06 F 15/30<br><br>G 07 F 7/00<br><br>G 07 C 9/00 |
| A | <u>EP - A2 - 0 003 756</u> (IBM)<br><br>* Patentanspruch 1, Zeilen 1-14; Patentanspruch 3; Fig. 1 *<br><br>-- | 1,2,11 | |
| A | <u>DE - A1 - 2 901 521</u> (DATA SAAB)<br><br>* Seite 1 - Seite 2, Zeile 20 *<br><br>-- | 1 | |
| D,A | <u>DE - A1 - 3 248 400</u> (GRYNBERG)<br><br>* Claims 1,4,5,6 *<br><br>---- | 1,7,11 | RECHERCHIERTE SACHGEBIETE (Int. Cl 4)<br><br>G 06 F<br><br>G 07 F |

Der vorliegende Recherchenbericht wurde für alle Patentansprüche erstellt

| Recherchenort | Abschlußdatum der Recherche | Prüfer |
|---|---|---|
| WIEN | 26-08-1985 | MIHATSEK |